# EUROPÄISCHE PATENTSCHRIFT

(11) **EP 0 811 184 B1**
(45) Veröffentlichungstag und Bekanntmachung des Hinweises auf die Patenterteilung: **11.09.2002**
(21) Anmeldenummer: 96904982.4
(22) Anmeldetag: 22.02.1996
(51) Int. Cl.: G05D 23/13

(54) **MISCHHAHNBATTERIEKARTUSCHE MIT THERMOSTATISCHER TEMPERATURREGELUNG**
MIXER TAP BATTERY CARTRIDGE WITH THERMOSTATIC TEMPERATURE CONTROL
CARTOUCHE POUR BATTERIE DE ROBINET MELANGEUR AVEC REGULATION THERMOSTATIQUE DE LA TEMPERATURE

(30) Priorität: 24.02.1995 HU 5700095
(43) Veröffentlichungstag der Anmeldung: 10.12.1997
(73) Patentinhaber: KEROX-MULTIPOLAR Ipari és Kereskedelmi Kft, 1117 Budapest (HU)
(72) Erfinder: BOLG R, György, H-1025 Budapest (HU); VIDOR, Gyo "zo ", H-1221 Budapest (HU)
(74) Vertreter: Schulte, Jörg, Dipl.-Ing.
(86) Internationale Anmeldenummer: HU9600009
(87) Internationale Veröffentlichungsnummer: WO96026475

(56) Entgegenhaltungen:
- EP-A- 0 242 675
- EP-A- 0 461 536
- EP-A- 0 605 845
- DE-A- 3 142 079
- DE-A- 3 300 600
- DE-A- 3 614 735
- US-A- 4 458 839

## Beschreibung

Das Objekt der Erindung ist eine Mischhahnbatteriekartusche mit thermostatischer Temperaturregelung.

Schon seit langer Zeit sind Mischhahnbatterien, die für Kalt- und Warmwassermischung dienen, bekannt, in welchen der Warm- bzw. Kaltwassereinfluss in Mischraum mit zwei separierten Hähnen gesichert ist. Dadurch wird die gewünschte Temperatur zwischen den Temperaturen der Warm- bzw. Kaltwassereinflüssen erzeugt. Der gestiegene Anspruch auf Gebrauchkomfort hat die Erzeugung der Einhebel-Mischhahnbatterie ausgelöst, die seit der Mitte der 60er Jahren mit keramischer Flachdichtung erschienen sind. (siehe USA Pat. Ser. No. 423,534. 05.01.1965 und EP-0 648 963 A1).

Diese Einhebel-Mischhahnbatterien mit keramischen Flachdichtungen, sind trotz wiederholten Veränderungen, Verfeinerungen und Detailerneuerungen, im Grunde auch heute mit dem Original im Aufbau und Funktion identisch. Mit der Betätigung eines Hebels, werden zwei harte, miteinander eine Flachdichtung formende Karamiken mit polierten Oberflächen zu einander bewegt, wodurch die Mischungsproportion und Durchflussqualität des Warm- und Kaltwassers geregelt wird. Im Allgemeinen erzeugt die Betätigung nach oben und unten die Öffnung und Schließung, wobei die Drehung die Temperatureinstellung gewährleistet. In den erwähnten Keramikscheiben sind entsprechende Ein- und Auslaßöffnungen bzw. Mischräume ausgestaltet.

Die Steuereinheit, welche die beiden Keramikscheiben, die bewegbaren und drehbaren Elemente, ebenso wie den oberen Bewegungshebel - worauf der einzige Betätigungshahn montiert wird - beinhaltet, wird als komplette Einheit als Kartusche bezeichnet. Die EP-0 648 963 A1 lehrt ergänzend zur Feineinstellung, die Einlaßscheibe und die Steuerscheibe mit mindestens zwei Ein- und Auslässen sowie Steueröffnungen zu versehen.

Außerdem sind Mischhahnbatterien zuerst für den Bedarf der Chirurgie erschienen, die die genaue Auslasswassertemperatur sichern und thermostatische Mischhahnbatterien genannt werden.

Für diese Mischhahnbatterien sind zwei von einander unabhängige Betätigungselemente entwickelt worden. Mit dem einen kann die Mischwasserströmung auf- und zugesperrt werden. Es ist ein Ventil mit einer herkömmlichen Gummidichtung, oder heutzutage eher mit einer keramischen Flachdichtung. Das andere Betätigungselement dient der genauen Auslasswassertemperatureinstellung und Regelung, und basiert sich auf der Funktion eines präzisionkalibrierten Wärmedehnungselementes.

Die Dehnung des Wärmedehnungselementes bewegt einen Kolben und dient der Kalt- und Warmwassereinlaßregelung. Dieser Kolben, und das mit dem Kolben zusammenmontierte Dehnungselement, werden durch die gleichmäßige Kraft einer Feder zu dem Ende einer Gewindespindel gepresst. Eine Gegenfeder mit größerer Spannkraft ist in dieser Gewindespindel eingebaut. Diese sichert, daß im Falle der plötzlichen Bewegung der Wärmesteuerspindel (in erster Linie wenn man den Wärmesteuerknopf von Warm- auf Kaltwasser umstellt) der ganz kleinhubige (0,8 - 1 mm) Kolben nicht angespannt werden kann.

Am Ende der Temperatursteuerspindel kann man auf feingliederige Rippen den Drehknopf anordnen und zwar in die Position, in welcher bei der eingestellten Wassertemperatur (38 - 40 C°) der Skalenwert und das Grundsignal übereinstimmen.

In der Praxis befindet sich die Temperaturskala auf dem Drehknopf, während der Ausgangspunkt auf dem Gehäuse der Mischhahnbatterie plaziert ist; doch es kann auch umgekehrt vorkommen. Bei den thermostatischen Mischhahnbatterien stimmt die Temperatur des Auslaufwassers mit dem angegebenem Wert auf der Temperaturskala überein, unabhängig von der Temperatur, Druck und Auslaßmenge des Kalt- und Warmwassers. Der Preis einer thermostatischen Mischhahnbatterie ist das vielfache einer mit Keramikscheiben aufgebauten Einhebel-Mischhahnbatterie.

Ein besonderer Nachteil der Einhebel-Mischhahnbatterie ist, daß die Temperatur des Auslaßwassers außer von der Dreheinstellung des Steuerhebels auch von der Temperatur, dem Druck des Kalt- und Warmwassers und der eingestellten Auslaufwassermenge abhängig ist. Dies wird bemerkbar, wenn der - im ganz offenem Zustand in einem gegebenen Drehwinkel stehende - Hahn geschlossen wird. Es verändert sich die Auslasswassertemperatur, bleibt also nicht konstant.

Auch die bekannten thermostatischen Mischhahnbatterien haben mehrere Nachteile, aufgrund derer sie häufig fehlerhaft arbeiten. Einer der größten Nachteile ist, daß die Wasserauslaßöffnung- und schließung nicht bei separatem Einlaß von Kalt- und Warmwasser passiert, sondern nach der thermostatischen Temperaturregelung. Da der Steuerkolben die Kalt- bzw. Warmwasser-Zweige nicht vollkommen von einander abschließen kann, sind die Kalt- und Warmwasser-Kanalnetze miteinander im geschlossenen Zustand in Verbindung, so daß auch bei der kleinsten Druckdifferenz eine Strömung auftreten kann.

Um dieses zu verhindern, muß in solchen Mischhahnbatterien im Bereich der Einführung des Kalt- und Warmwassers je ein Rückschlagventil eingebaut werden.

Da in diesen Rückschlagventilen der kleinste Feststoffkörper den dichten Verschluß verhindern kann, ist der Einbau von feinen Sieben vor diesen Ventilen notwendig. Ein weiterer Nachteil ist der Bedarf von zwei separaten, voneinander unabhängigen Steuereinheiten für die Regelung der Wassermenge und der Wassertemperatur. Dies führt zu materialaufwendigen und unkonventionell gebauten Gehäusen.

Das Ziel der vorliegenden Erfindung ist die Vermeidung der oben erwähnten Nachteile und die Vereinfachung des Gebrauches und der Montage der thermostatischen Mischhahnbatterien sowie die Erhöhung ihrer Betriebssicherheit.

Weiter ist es Aufgabe der Erfindung, eine Mischhahnbatteriekartusche zu schaffen, welche die Auslaßwassermenge und -temperatur mit einem und dem gleichen Betätigungselement, vorteilhaft mit einem Hebel, einstellen läßt. Durch die Drehbewegung dieses Hebels soll die Temperatur des Auslaßwassers und durch die senkrechte Bewegung, auf der bei Einhebel-Mischhahnbatterien schon bereits bekannten Art und Weise soll die Auslaßwassermenge sich einstellen lassen.

Gemäß der Erfindung wird die Aufgabe mit einer Mischhahnbatteriekartusche gemäß kennzeichnende Teil des Anspruches 1 gelöst.

Der Erfindung nach sieht eine vorteilhafte Weiterbildung vor, daß der Wärmedehnungseinlage eine Einstellfeder zugeordnet ist, die sich am Steuerkolben und an einer Verschlußschraube abstützend und die Wärmedehnungseinlage umfassend angeordnet ist.

Weiterhin sieht eine Weiterbildung vor, daß in der Steuerspindel eine Feineinstellhülse mit Gewinde angeordnet ist.

Erfindungsgemäß ist weiter vorgesehen, daß die Steuerspindel mit dem Betätigungshebel durch eine Verschlußkappe verbunden ist.

Schließlich ist eine zweckmäßige Weiterentwicklung die, bei der die Steuerspindel mit einem Hebelhalterelement dieses mitdrehend verbunden ist.

Anhand der Zeichnungen wird der Aufbau und Funktionsweise der erfindungsgemäßen Mischhahnbatteriekartusche im weiteren näher erläutert.
- Fig. 1: stellt eine Ausführungsform der thermostatischen Mischhahnbatteriekartusche im Querschnitt dar.
- Fig. 2: zeigt die Unter- und Seitenansicht der keramischen Steuerscheibe der Mischhahnbatteriekartusche gemäß Fig. 1 im Teilschnitt.
- Fig.3: zeigt die Oberansicht der keramischen Einlaßscheibe.
- Fig. 4 und 5: zeigen die Anordnung zweier Keramikscheiben in verschiedenen Winkelpositionen.
- Fig. 6: zeigt eine Verbindungsmöglichkeit zwischen dem Betätigungshebel un der Steuerspindel.
- Fig. 7: zeigt eine andere mechanische Verbindungsmöglichkeit in einer der Ausführungsform mit einer Feineinstellhülseerweiterung im Teilschnitt.

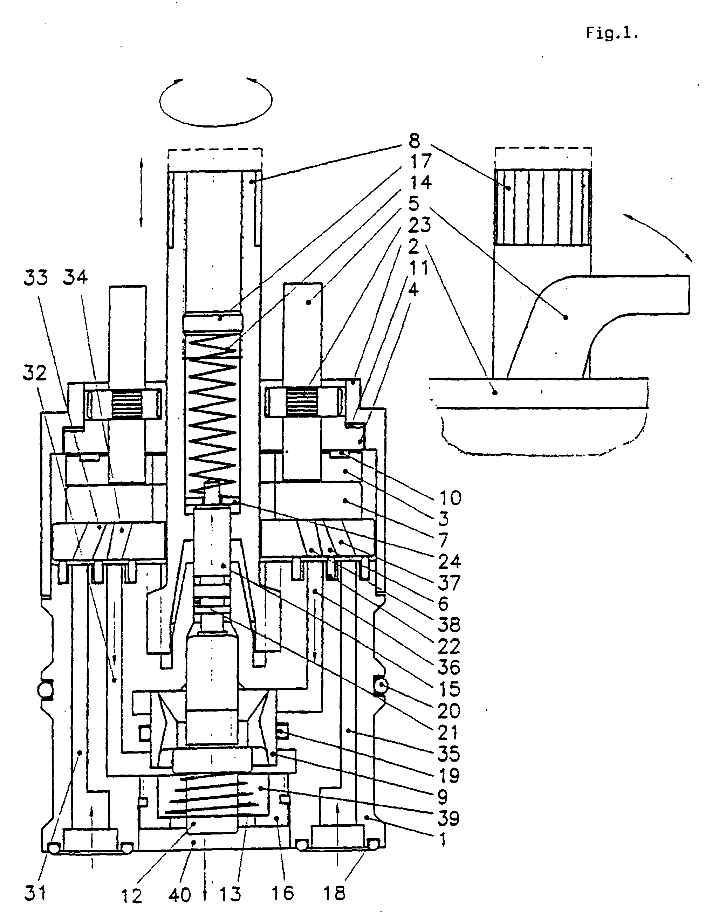

Gemäß Figur 1 ist die Mischhahnbatteriekartusche in einem Gehäuse 1 angeordnet und mit einem Deckel 2 abgeschlossen. Zwischen dem Hebelhalterelement 4 und dem Keramikbewegungselementen 3 befindet sich eine Gleitplatte 10.

In einer zentralen Bohrung des Gehäuses 1 ist die Steuerspindel 8 mit Gewindebindung angeordnet.

In der Steuerspindel 8 und der konzentrischen Bohrung des Gehäuse 1 befindet sich eine Hebestange 15, die gegen das Gehäuse 1 mit einem vierten Dichtungsring 21 abgedichtet ist.

Das dem Gehäuse 1 gegenüberliegende Ende der Steuerspindel 8 ist zweckmäßig geriffelt. In dem Inneren der Steuerspindel 8 ist eine sich an der Hebestange 15 abstützende Unterlage 24 und zwischen der Unterlage 24 und einer mit Gewinde ausgerüsteten Federeinstellschraube 17 ist eine Gegenfeder 14 angeordnet. In dem Gehäuse 1 befindet sich der Warmwasser-Einlaßkanal 31, der Warmwasser-Auslaßkanal 32, der Kaltwasser-Einlaßkanal 35 und der Kaltwasser-Auslaßkanal 36.

In dem Hohlraum (Mischraum 39) des Gehäuses 1 ist eine Wärmedehnungseinlage 12, die in mechanischer Verbindung mit dem Steuerkolben 9 steht, zweckmäßig konzentrisch angeordnet. Am - der Hebestange 15 entgegengesetzten - Ende der Wärmedehnungseinlage 12 ist eine an einer Verschlußschraube 16 abgestützte Einstellfeder 13 angeordnet.

Der Steuerkolben 9 ist zu dem Gehäuse 1 über einen zweiten Dichtungsring 19 abgedichtet. Die Außenseite des Gehäuses 1 weist einen dritten Dichtungsring 20 auf.

Eine Einlaßscheibe 6 ist in der der Verschlußschraube 16 und dem Mischwasserauslaß 40 entgegengesetzten Seite des Gehäuses 1 angeordnet. In dieser befindet sich ein dem Warmwasser-Einlaßkanal 31 angepasster Warmwasser-Hochlaßkanal 33. An den Warmwasser-Auslaßkanal 32 schließt der Warmwasser-Rücklaßkanal 34 an. Der Kaltwasser-Auslaßkanal 36 ist mit dem Kaltwasser-Rücklaßkanal 38 und der Kaltwasser-Einlaßkanal 35 mit dem Kaltwasser-Hochlaßkanal 37 verbunden. Es befindet sich eine Formdichtung 22 zwischen der Einlaßscheibe 6 und dem Gehäuse 1.

Auf der dem Gehäuse 1 entgegengesetzten Seite der Einlaßscheibe 6 ist eine Steuerscheibe 7 und darüber ein Keramikbewegungselement 3 angeordnet. Über dem Keramikbewegungselement 3 ist eine Gleitplatte 10 und darüber ein Hebelhalterelement 4 angeordnet, in welchem auf Stiften 23 der Keramikbewegungshebel 5 gelagert ist.

In Figur 2 ist die Unteransicht und Seitenansicht im Teilschnitt der Steuerscheibe 7 sichtbar. Der Zeichnung gemäß sind in der Steuerscheibe 7 eine Warmwasser-Rücklaßkammer 41 und eine Kaltwasser-Rücklaßkammer 42 ausgestaltet.

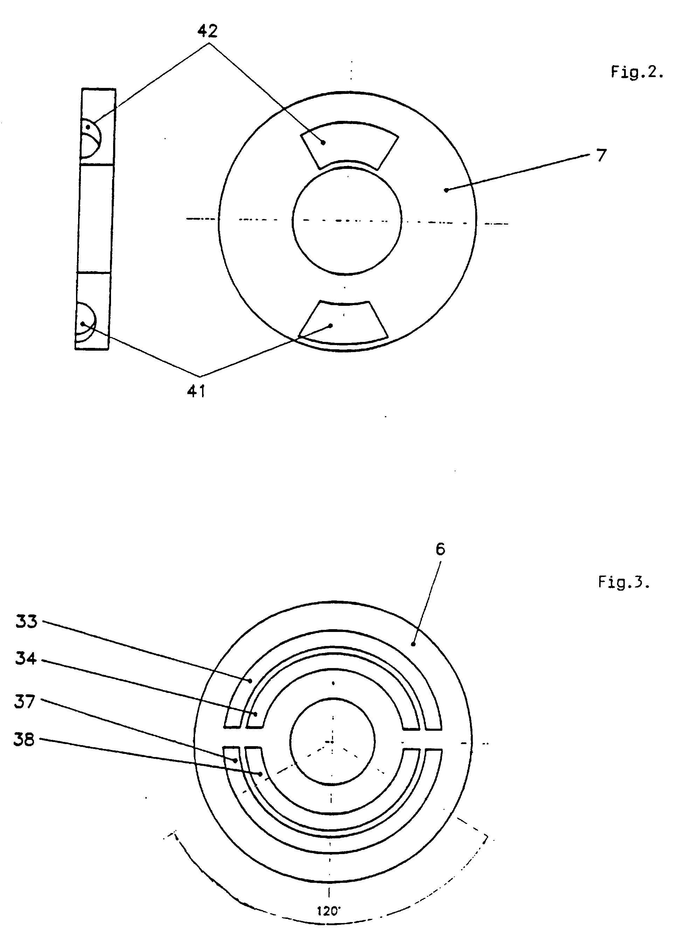

Figur 3 zeigt die Ansicht der Einlaßscheibe 6 von oben. In dieser ist ein Warmwasser-Hochlaßkanal 33, ein Warmwasser-Rücklaßkanal 34, ein Kaltwasser-Hochlaßkanal 37 und ein Kaltwasser-Rücklaßkanal 38 ausgestaltet.

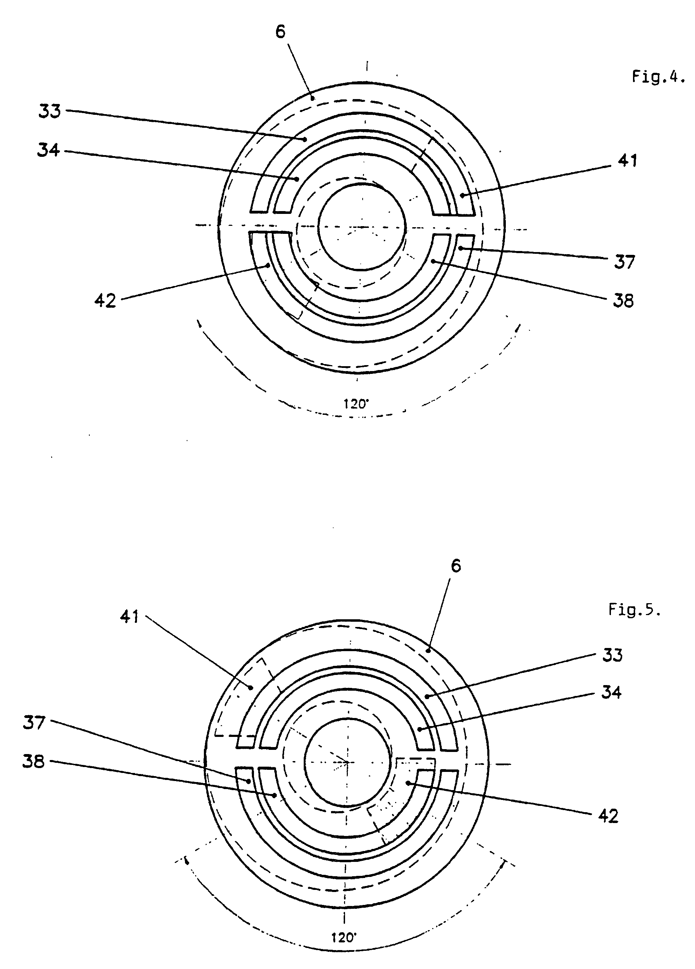

In Figur 4 und 5 sind verschiedene relative Stellungen der Einlaßscheibe 6 und der Steuerscheibe 7 dargestellt.

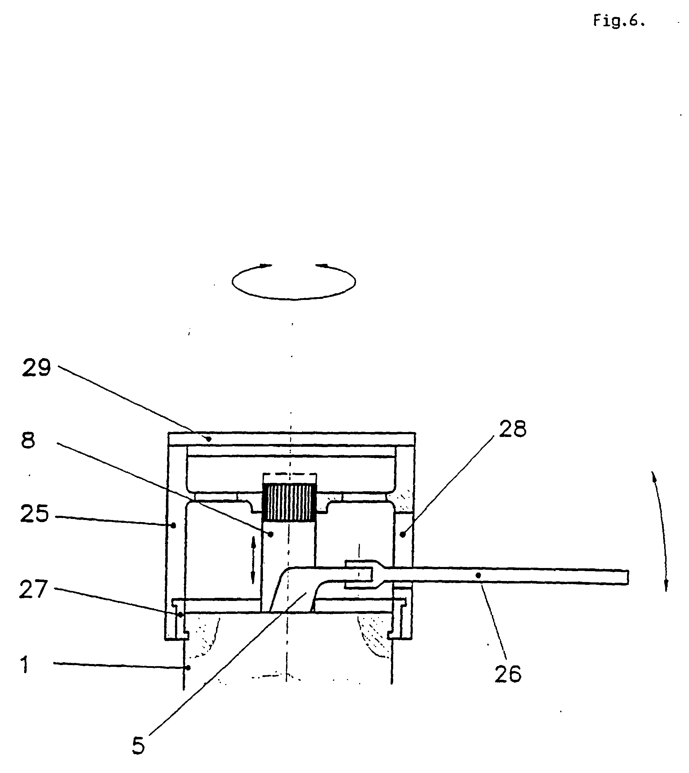

In Figur 6 ist eine mechanische Verbindung zwischen dem Keramikbewegungshebel 5 und der Steuerspindel 8 sichtbar. Gemäß Figur 6 ist der Keramikbewegungshebel 5 und die Steuerspindel 8 durch einen Betätigungshebel 26 und eine - an dem Gehäuse 1 mit einem zweikantigen Ring 27 angeschlossene - Verschlusskappe 25 zusammengeschlossen, in welcher in einer Mitnehmernut 28 der Betätigungshebel 26 angeordnet ist.

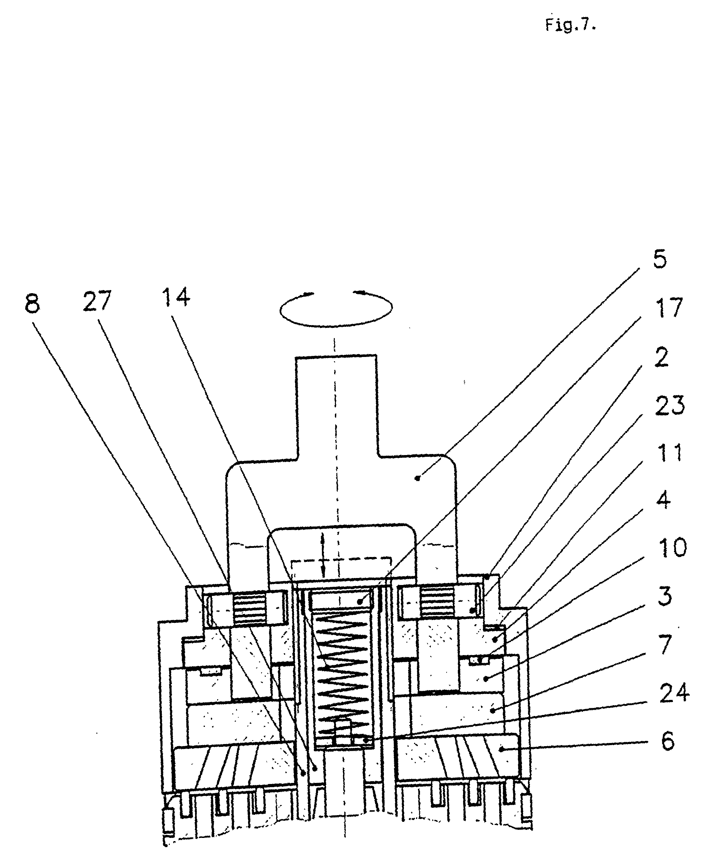

Die Temperaturregelungs-Mischhahnbatteriekartusche gemäß Figur 7 weicht von der Ausführungsform gemäß Figur 1 insoweit ab, als die Steuerspindel 8 mit dem Hebelhalterelement 4 in der Drehrichtung durch eine - sich an dem Spindelende befindende - rippenförmige Ausgestaltung in Verbindung ist. So ist die in Figur 6 sichtbare Verschlusskappe 25 für die Sicherung der Mitnehmer-Verbindung zwischen der Steuerspindel 8 und dem Keramikbewegungshebel 5 nicht nötig. Auch die Anordnung der Feineinstellhülse 43 in der Steuerspindel 8 ist nur zweckmäßig.

Im weiteren wird die Funktion der an den Figuren 1 - 7 dargestellten Mischhahnbatteriekartusche näher dargelegt.

Bei dieser Ausführungsform der in Figur 1 dargestellten Mischhahnbatterie gelangt das Warmwasser durch den Warmwasser-Einlaßkanal 31 in den Warmwasser-Hochlaßkanal 33 der Einlaßscheibe 6. Von hier kommt das Warmwasser in einer - von der jeweiligen relativen Position der Einlaßscheibe 6 und der Steuerscheibe 7 abhängigen - Menge über die Warmwasser-Rücklaßkammer 41 (auf der Figur 1 nicht sichtbar), zuerst in den Warmwasser-Rücklaßkanal 34 und von da durch den Warmwasser-Auslaßkanal 32 zum unteren Teil des - mit der Wärmedehnungseinlage 12 in mechanischer Verbindung stehenden - Steuerkolben 9.

Das Kaltwasser gelangt durch den Kaltwasser-Einlaßkanal 35, dann durch den Kaltwasser-Hochlaßkanal 37, durch die Kaltwasser-Rücklaßkammer 42 (in Figur 1 nicht sichtbar), durch den Kaltwasser-Rücklaßkanal 38 und den Kaltwasser-Auslaßkanal 36 an den oberen Teil des Steuerkolbens 9.

Die Steuerscheibe 7 ist auf der Einlaßscheibe 6 mit einem - in im Deckel 2 verdrehbaren Hebelhalterelement 4 gelagerten - Keramikbewegungshebel 5 übers Keramikbewegungselement 3 einerseits senkrecht zur Drehachse verschiebbar, andererseits jedoch gemäß Figur 4 und 5 auch verdrehbar.

Diese zur Drehachse senkrechte Verschiebung sichert, dass in einer beliebigen Position binnen des Drehwinkelbereichs für den Durchfluss des Warm- beziehungsweise Kaltwassers ein - sich in der Abhängigkeit von der zur Drehachse senkrechten Verschiebung verändernder - aber relativ gleicher Durchflussquerschnitt zur Verfügung steht, das heißt, dass der obere und untere Teil des Steuerkolbens 9 stets über einen im Querschnitt gleichen Warmwasser- und Kaltwassereinfluss gespeist ist.

Mit Rücksicht darauf, dass bei beliebiger Verdrehung des Keramikbewegungshebels 5 der - zwecks Einführung des Warm- beziehungsweise Kaltwassers zwischen der Einlaßscheibe 6 und der Steuerscheibe 7 zur Verfügung stehender - Durchflussquerschnitt nur von der senkrechten Stellung des Keramikbewegungshebels 5 abhängt, die Verdrehung des Keramikbewegungshebels 5 ist dagegen zur Einstellung der Temperaturregulierung zu verwenden.

Mit dem Keramikbewegungshebel 5, beziehungsweise in anderen Ausführungsformen mit den, dem Keramikbewegungshebel 5 gekoppelten, anderen Elementen mechanisch verbundene Steuerspindel 8, über eine - durch eine Gegenfeder 14 vorgespannte - Unterlage 24, bestimmt die Postition der Hebestange 15. Am anderen Ende der Hebestange 15 ist die mit dem Steuerkolben 9 verbundene Wärmedehnungseinlage 12 angeordnet. Dieses andere Ende befindet sich in dem Mischwasserauslaß 40. Die in dem Mischwasserauslaß 40 existierende Wassertemperatur kann - zwischen den eingespeisten Kaltwasser- und Warmwassertemperatur - mit der Einstellung des - mit der Steuerspindel 8 in Verbindung stehenden - Steuerkolbens 9 eingestellt werden.

In Ruheposition wird der Steuerkolben 9 und die mit ihm verbundene Wärmedehnungseinlage 12 mit der Einstellfeder 13 so nach oben gedrückt, daß der Steuerkolben 9 den Kaltwasser-Auslaßkanal 36 abschließt und dies obwohl der Einfluss durch die Steuerscheibe 7 mit dem Heben des Keramikbewegungshebels 5 auch für Kalt- und Warmwasser freigestellt wird. Es gelangt durch den Warmwasser-Auslaßkanal 32 in den Mischraum 39 nur Warmwasser, bis die durch die Verdrehung der Steuerspindel 8 eingestellte Temperatur durch die Auslaufwassertemperatur nicht erreicht wird.

Bei dieser Temperatur - wegen der Dehnung der Wärmedehnungseinlage 12-wird diese zum Ende der Hebestange 15 angehoben und weil die Druckkraft der Gegenfeder 14 die Druckkraft der Einstellfeder 13 wesentlich übertrifft, verschiebt sich der Steuerkolben 9 und öffnet einerseits den Kaltwasser-Auslaß 36, andererseits schließt er ein wenig den Warmwasser-Auslaß 36 bis im Mischraum 39 bzw. im Mischwasserauslaß 40, die Auslaßwassertemperatur die eingestellte Temperatur nicht erreicht hat.

Mit Rücksicht darauf, daß mit der Hebung des Keramikbewegungshebels 5, beziehungsweise des dazu gekoppelten Betätigungshebels 26 gemäß Figur 6, die Kaltund Warmwasserdurchflussquerschnitte in gleichem Masse verändert werden können, mit der - zur Drehachse senkrechten - Verschiebung der Steuerscheibe 7, beim beliebigen Einstellwinkel des Keramikbewegungshebels 5 oder des Betätigungshebels 26, bleibt der Wassereinflussquerschnitt der zwei Wässer mit verschiedenen Temperaturen gleich. So wird die Mischwassertemperatur ausschließlich von dem - durch die, durch dem Keramikbewegungshebel 5, beziehungsweise dem Betätigungshebel 26 erfolgte Verdrehung eingestellt - Drehwinkel der Steuerspindel 8 beziehungsweise die dadurch bestimmte Stellung der Hebestange 15 bestimmt.

Der Unterlage 24, die in der Steuerspindel 8 angeordnet ist, die Federeinstellschraube 17 und die dazwischen vorgespannte Gegenfeder 14 sichern, dass die einzustellende Wassertemperatur problemlos nach unten geändert werden kann. Dazu wird die Steuerspindel 8 bzw. die Hebestange 15 nach unten bewegt, welche im Falle einer starren Verbindung ein Hochschlagen des Steuerkolbens 9 auf die Verschlußschraube 16 verursachen würde wegen der Dehnung der Wärmedehnungseinlage 12 und dadurch eine Verklemmung oder eine Beschädigung hervorrufen würde. Da aber in solchem Falle das in der unteren Stellung des Steuerkolbens 9 erfolgende Hochschlagen (Anschlag) bei einer weiteren Verdrehung der Steuerspindel 8, die Hebestange 15 die Unterlage 24 gegenüber der Gegenfeder 14 hochhebt, wird die Beschädigung der Konstruktion dadurch verhindert.

Die Ausführungsform gemäß Figur 7 vereinfacht den Konstruktionsaufbau dadurch, daß die Steuerspindel 8 in unmittelbarer Mitnehmer-Verbindung in der Drehrichtung mit dem Hebelhalterelement 4 steht. Außerdem ist in der Steuerspindel 8 mit Gewindebindung eine Feineinstellhülse 43 angeordnet. Die Anwendung dieser erleichtert die optimale Kalibrierung der Kartusche, weil in der gegebenen Drehstellung der Steuerspindel 8 die Auslaufwassertemperatur mit der Verdrehung der Feineinstellhülse 43 fein eingestellt werden kann.

Der Vorteil der erfindungsgemäßen Thermostatmischhahnbatteriekartusche ist, daß diese in einer kompletten Einheit die traditionelle Keramikkartusche und die thermostatische Temperaturregelungseinheit konzentriert. Dies ermöglicht die allgemeine Erweiterung der Anwendung der thermostatischen Temperatureinstellung, sichert die thermostatische Temperaturregelung in dem ganzen Familienkreis der Einhebel-Mischhahnbatterien. Der besondere Vorteil der Einrichtung, verglichen mit den ursprünglichen Keramikkartuschen ist , daß die Wassermengenregelung, Öffnung und Schließung vor der thermostatischen Temperaturregelung ausgeführt wird. Die Warm- und Kaltwasseröffnung und -schließung erfolgt mit Hilfe zweier speziell entwickelter Keramikscheiben - Spaltensteuerung - so daß Rückklappventile nicht notwendig sind. In der Wasserströmungsrichtung ist die thermostatische Temperaturregelung nach dem - zum Öffnen und Schließen dienenden - Keramikscheiben angeordnet, von wo aus das Wasser gleich in den Mischwasserauslaß gelangt.

### ELEMENTENVERZEICHNIS

| Referenznummer | Benennung |
|---|---|
| 1 | Gehäuse |
| 2 | Deckel |
| 3 | Keramikbewegungselement |
| 4 | Hebelhalterelement |
| 5 | Keramikbewegungshebel |
| 6 | Einlaßscheibe |
| 7 | Steuerscheibe |
| 8 | Einstellspindel |
| 9 | Steuerkolben |
| 10 | Gleitplatte |
| 11 | Gleitring |
| 12 | Wärmedehnungseinlage |
| 13 | Einstellfeder |
| 14 | Gegenfeder |
| 15 | Hebestange |
| 16 | Verschlußschraube |
| 17 | Federeinstellschraube |
| 18 | erster Verdichtungsring |
| 19 | zweiter Verdichtungsring |
| 20 | dritter Verdichtungsring |
| 21 | vierter Verdichtungsring |
| 22 | Formdichtung |
| 23 | Stift |
| 24 | Unterlage |
| 25 | Verschlußkappe |
| 26 | Betätigungshebel |
| 27 | zweikantiger Ring |
| 28 | Mitnehmernut |
| 29 | Verschlußdeckel |
| 31 | warmwasser Einlaßkanal |
| 32 | Auslaßkanal |
| 33 | warmwasser Hochlaßkanal |
| 34 | warmwasser Rücklaßkanal |
| 35 | kaltwasser Einlaßkanal |
| 36 | kaltwasser Auslaßkanal |
| 37 | kaltwasser Hochlaßkanal |
| 38 | kaltwasser Rücklaßkanal |
| 39 | Mischraum |
| 40 | Mischwasserauslaß |
| 41 | warmwasser Rücklaßkammer |
| 42 | kaltwasser Rücklaßkammer |
| 43 | Feineinstellhülse |

## Patentansprüche

1. Mischhahnbatteriekartusche mit einer aus Keramik bestehenden Einlaßscheibe (6) und einer Steuerscheibe (7), wobei in der Steuerscheibe (7) eine Warmwasser-Rücklaßkammer (41) und eine Kaltwasser-Rücklaßkammer (42) ausgebildet sind, während die Einlaßscheibe (6) mit damit korrespondierenden Warm- und Kaltwasser-Hochlaßkanälen (33, 37) und Warm- und Kaltwasser-Rücklaßkanälen (34, 38) versehen ist, wobei die Hochlaßkanäle (33, 37) mit entsprechenden Einlaßkanälen (31, 35) und die Rücklaßkanäle mit entsprechenden Auslaßkanälen (32, 36) verbunden sind,
**dadurch gekennzeichnet,**
**dass** die von der Einlaßscheibe (6) wegführenden Warm- und Kaltwasser-Auslaßkanäle (32, 36) einen vor einem Mischraum (39) angeordneten Steuerkolben (9) passierend ausgebildet sind, der einerseits mit einer im Mischwasser angeordneten Wärmedehaungseinlage (12) und andererseits mit einer bis in eine Steuerspindel (8) hineinreichende und sich an einer in der Steuerspindel (8) angeordneten Gegenfeder (14) abstützenden Hebestange (15) mechanisch verbunden ist, wobei die Teile der in der Einlaßscheibe (6) ausgestalteten Warm- und Kaltwasser-Hochlaßkanäle (33, 37) und der Warmund Kaltwasser-Rücklaßkanäle (34, 38) die mit der Steuerscheibe (7) in Berührung stehen, im wesentlichen kreisbogenförmig ausgestaltet sind, wobei die Steuerscheibe (7) direkt oder indirekt an einen Keramikbewegungshebel (5) angeschlossen ist, der mit der Hebestange (15) direkt oder indirekt in Mitnehmerverbindung steht.

2. Mischhahnbatteriekartusche nach Anspruch 1,
**dadurch gekennzeichnet,**
**dass** der Wärmedehnungseinlage (12) eine Einstellfeder (13) zugeordnet ist, die sich am Steuerkolben (9) und an einer Verschlußschraube (16) abstützend und die Wärmedehnungseinlage (12) umfassend angeordnet ist.

3. Mischhahnbatteriekartusche nach einem der vorhergehenden Ansprüche,
**dadurch gekennzeichnet,**
**dass** in der Steuerspindel (8) eine Feineinstellhülse (43) mit Gewinde angeordnet ist.

4. Mischhahnbatteriekartusche nach einem der vorhergehenden Ansprüche,
**dadurch gekennzeichnet,**
**dass** die Steuerspindel (8) mit dem Betätigungshebel (26) durch eine Verschlußkappe (25) verbunden ist.

5. Mischhahnbatteriekartusche nach einem der vorhergehenden Ansprüche,
**dadurch gekennzeichnet,**
**dass** die Steuerspindel (8) mit einem Hebelhalterelement (4), dieses mitdrehend verbunden ist.

## Claims

1. Mixer tap battery cartridge with an inlet disc (6) consisting of ceramics and a control disc (7), a hot water return chamber (41) and a cold water return chamber (42) being formed in the control disc (7), while the inlet disc (6) is provided with hot and cold water riser ducts (33, 37) corresponding thereto and hot and cold water return ducts (34, 38), the riser ducts (33, 37) being connected to corresponding inlet ducts (31, 35) and the return ducts being connected to corresponding outlet ducts (32, 36), **characterised in that** the hot and cold water outlet ducts (32, 36) leading away from the inlet disc (6) are designed to pass through a control plunger (9) arranged upstream from a mixing chamber (39), the control plunger (9) being mechanically connected on the one hand to a thermal expansion insert (12) arranged in the mixing water and on the other hand to a lifting rod (15) extending into a control spindle (8) and supported on a counterspring (14) arranged in the control spindle (8), the parts of the hot and cold water riser ducts (33, 37) formed in the inlet disc (6) and of the hot and cold water return ducts (34, 38) contacting the control disc (7) being substantially arcuate in design, the control disc (7) being directly or indirectly attached to a ceramic movement lever (5) being in direct or indirect driving connection with the lifting rod (15).

2. Mixer tap battery cartridge according to claim 1, **characterised in that** an adjusting spring (13) which is supported on the control plunger (9) and on a screw plug (16) and comprising the thermal expansion insert (12) is associated with the thermal expansion insert (12).

3. Mixer tap battery cartridge according to any one of the preceding claims, **characterised in that** a fine adjustment sleeve (43) with thread is arranged in the control spindle (8).

4. Mixer tap battery cartridge according to any one of the preceding claims, **characterised in that** the control spindle (8) is connected by a screw cap (25) to the actuating lever (26).

5. Mixer tap battery cartridge according to any one of the preceding claims, **characterised in that** the control spindle (8) is rotationally engaged with a lever holder element (4).

## Revendications

1. Cartouche de batterie de mitigeurs comportant un disque d'entrée (6) en céramique et un disque de commande (7), et dans laquelle une chambre (41) de retour d'eau chaude et une chambre (42) de retour de l'eau froide sont formées dans le disque de commande (7), tandis que le disque d'entrée (6) est pourvu de canaux correspondants (33, 37) d'amenée de l'eau chaude et de l'eau froide et de canaux (34, 38) de retour de l'eau chaude et de l'eau froide, les canaux d'amenée (33, 37) étant reliés à des canaux d'entrée correspondants (31, 35), et les canaux de retour étant reliés à des canaux de sortie correspondants (32, 36), **caractérisée en ce que** les canaux de sortie d'eau chaude et d'eau froide (35, 36), qui s'étendent à partir du disque d'entrée (6), sont agencés d'une manière passante un piston de commande (9) disposé en amont d'une chambre de mélange (39) et qui est relié mécaniquement d'une part à un insert de dilatation thermique (12) disposé dans l'eau de mélange et d'autre part à une tige de levage (15) qui pénètre jusque dans la broche de commande (8) et prend appui sur un ressort antagoniste (14) disposé dans la broche de commande (8), les parties des canaux d'amenée d'eau chaude et d'eau froide (33, 37) formés dans le disque d'entrée (6), et les canaux (34, 38) de retour d'eau chaude et d'eau froide, qui sont en contact avec le disque de commande (7) étant agencés essentiellement en forme d'arc de cercle, le disque de commande (7) étant raccordé directement ou indirectement à un levier de déplacement céramique (5), qui est relié selon une liaison d'entraînement direct ou indirect à la tige de levage (15).

2. Cartouche de batterie de mitigeurs selon la revendication 1, **caractérisée en ce qu'**à l'insert de dilatation thermique (12) est associé un ressort de réglage (13), qui est disposé de manière à prendre appui sur le piston de commande (9) et sur une vis de fermeture (16) et entoure l'insert de dilatation thermique (12).

3. Cartouche de batterie de mitigeurs selon l'une des revendications précédentes, **caractérisée en ce qu'**une douille de réglage précise (43) pourvue d'un filetage est disposé dans la broche de commande (8).

4. Cartouche de batterie de mitigeurs selon l'une des revendications précédentes, **caractérisée en ce que** la broche de commande (8) est reliée au levier d'actionnement (26) par un capuchon de fermeture (25).

5. Cartouche de batterie de mitigeurs selon l'une des revendications précédentes, **caractérisée en ce que** la broche de commande (8) est reliée à un élément (4) de retenue du levier, de manière à entraîner ce dernier conjointement en rotation.
